## Europäisches Patentamt
## European Patent Office
## Office européen des brevets

(19)

(11) Publication number : **0 192 285**
**B1**

(12)

# EUROPEAN PATENT SPECIFICATION

(45) Date of publication of patent specification :
11.01.89

(51) Int. Cl.⁴ : **B 09 B  5/00**

(21) Application number : 86200104.7

(22) Date of filing : 23.01.86

(54) Method and system for biological reconditioning of contaminated soil.

(30) Priority : 15.02.85 NL 8500445

(43) Date of publication of application :
27.08.86 Bulletin 86/35

(45) Publication of the grant of the patent :
11.01.89 Bulletin 89/02

(84) Designated contracting states :
BE DE GB NL

(56) References cited :
GB--A-- 2 053 182
US--A-- 3 616 204
US--A-- 4 385 121
US--A-- 4 401 569
HANDBOEK BODEMSANERINGSTECHNIEKEN, 1st
July 1983, pages 23,24, Staatsuitgeverij, 's-Graven-
hage, NL

(73) Proprietor : Heidemij Uitvoering B.V.
Lovinklaan 1
NL-6821 HX Arnhem (NL)

(72) Inventor : Verschueren, Karel
No. 9 Wildzang
NL-6852 JS Huissen (NL)
Inventor : Batstra, Alexander Leopold
No. 4 Iepenlaan
NL-5248 AK Rosmalen (NL)
Inventor : Mulder, Erik Cornelis
No. 29 Merwededijk
NL-4285 WC Woudrichem (NL)

(74) Representative : Schumann, Bernard Herman Johan
et al
OCTROOIBUREAU ARNOLD & SIEDSMA Sweelinck-
plein 1
NL-2517 GK The Hague (NL)

## Description

The invention relates to a new method for biologically reconditioning of soil.

US-A-4,401,569 discloses a method and apparatus for treating a contaminated site, in which liquid or ground water is extracted from the ground surrounding that contaminated site. The contaminated site is certainly not placed in an isolated and conditionable space. Namely, the contaminated soil remains at the site, and a dewatering trench and reinjection trenches are dug into the ground at some place down gradient and up gradient, respectively, of said site. All trenches are filled with gravel or similar material and only ground water containing contaminating compounds, is removed and reinjected. Accordingly water is not recycled in a closed circulation, since ground water in and near the contaminated site is in contact with uncontaminated ground water and rain water.

A severe draw back of this known method is, that since the dynamics of the ground water flow cannot be determined accurately, the area of the ground through which the ground water is circulated, is at least three to four fold larger than the contaminated site. Clean soil is contaminated, resulting in a dilution of the contamination, and a disappearance of the contamination via ground water action in undesired or unknown directions. An organic contamination has a hydrophobic character, and will affect the ground water flow or move in another even inverse direction.

Although the removal of the contaminated soil to a specific site is not contemplated, although the dewatering and reinjecting trenches must be dug into the ground and this digging action also results in a disturbance of the normal ground water flow.

US-A-3,616,204 discloses a method for in situ soil restoration, in which the soil is inocculated with specific micro-organisms and optionally a nutrient medium containing specific additives is added. Furthermore the spill area may be covered with plastic or a gas-impermeable sheet so that the surface of the contaminated soil is exposed to a controlled atmosphere.

Temperature control could be effected by heating or cooling with any gas or liquid stream. This indicates that this known method does not use solar energy for creating relatively high temperature conditions. This known method does not use an isolated and conditionable space in which the reconditioning reactions take place at high temperature and humidity conditions.

The method according to the invention for biologically reconditioning of contaminated soil, comprises the steps of :

a) removing the contaminated soil from its surroundings ;

b) placing the removed and contaminated soil in a conditionable space which is formed by bounding means completely enclosing the contaminated soil and being impermeable for water and for the contamination, but at least partially permeable for sunlight ;

c) providing a closed water recycling system, comprising ;

d) recycling of the liquid extracted from the contaminated soil residing in the conditioned space ;

e) moistening the soil with the recycled water ; and

f) optionally aereating periodically the soil residing in the conditioned space.

Because the contaminated soil is placed in the closed, conditioned space, any risk of leakage into the environment is avoided. Moreover, in view of the fact that sunlight can penetrate into this space, the advantage is achieved that a hot house effect occurs and, as a consequence of the thereby resulting higher temperature, the biological reconditioning is accelerated by a factor of three.

The biological reconditioning takes place substantially with biological organisms already present in the soil, such as bacterias, actinomycetes, moulds, algae and the like. By directing the liquid in a cycle, a movement of liquid results which stimulates a good contact between the contamination dissolved in the liquid on the one hand and the organisms breaking down the contamination on the other. The movement of water also ensures leaching and the substantially homogenous distribution of the leached contamination through the soil.

If, depending on the contamination, an aerobic biological reconditioning is opted for, the soil is then aerated, either periodically, or not. This aeration has the added function of making and keeping the soil aerated so that as a result of the continual moistening closing up of the soil at the air/soil interface is prevented.

If the contaminated soil contains insufficient liquid, extra water can be added to the recycled liquid. The liquid fed into the cycle cannot enter the environment, and contains liquid soluble contamination only temporarily. After completion of the biological reconditioning however, this contamination is likewise broken down by the organisms, so that after the ending of the biological reconditioning, not only the soil but also the liquid thereby used is either substantially free of contamination or contains a contamination concentration which lies within the legally defined norms.

Chemicals can if necessary be added to the liquid in order to influence the biological reconditioning in the required manner. In addition it is possible to add water soluble chemicals such as a detergent, for example a detergent that is biologically difficult to break down, to the contamination.

If the contaminated soil itself contains an insufficient quantity of organisms for breaking down contamination, this deficiency can be dispensed with by mixing for example active sludge with the contaminated soil beforehand. Active sludge contains a high concentration of biologically active organisms. If the contaminated soil has a suboptimal carbon to nitrogen + phosphate ratio (a contamination consisting for example of hydrocarbons), the contaminated soil can be admixed with manure, which is rich in nitrogen and phosphor, so that the C/(N+P) ratio improves.

A system specifically designed for biologically reconditioning contaminated soil, comprises :

1) bounding means at least partially admitting sunlight which form a conditionable space enclosing the contamination for the accommodation therein of the contaminated soil ;

2) drainage means for extracting liquid from the soil ;

3) spray means for spraying the soil, whereby the drainage means and the spray means form a closed cycle together with the space ; and

4) if necessary, aerating means for aerating the soil.

If a liquid reservoir is incorporated in the cycle, as much of the liquid present in the space as possible can already be collected in this liquid reservoir prior to the aeration.

If separate drainage and aerating pipes, preferably laid running in transverse direction relative to one another, are present in the system, an optimal system results because the number of drainage pipes per square metre of contaminated soil can be smaller than the number of aerating pipes.

The system can if necessary be provided with sacks arranged in the space intended for accommodating the contaminated soil, possibly provided with strips admitting air and/or liquid. In this way loads of contaminated soil can be treated separately in the same space. If necessary, different types of contaminated soil or loads of contaminated soil in different reconditioning phases can be processed simultaneously.

If the bounding means comprise sunlight admitting foil, whereby the system is preferably arranged at least partially in a treach present in the ground, a system results which particularly lends itself to placing in an agrarian area, whereby after the completion of the biological reconditioning the soil in principle becomes available for other use. The system is moreover laid out such that little supervision is necessary and few mechanical operations need be carried out, for example because keeping the soil aerated can be accomplished via an aerating step. The whole biological reconditioning lasts about 6-9 months, depending on the weather conditions and the contamination.

Mentioned and other characteristics will be explained on the basis of two embodiments of the system according to the invention, with reference to the appended drawing.

In the drawing :

Fig. 1 is a perspective partly broken away view of a system according to the invention ;

Fig. 2 is a perspective partly broken away view of another embodiment of the system according to the invention ; and

Fig. 3 shows on a larger scale a section along the line III-III from fig. 2.

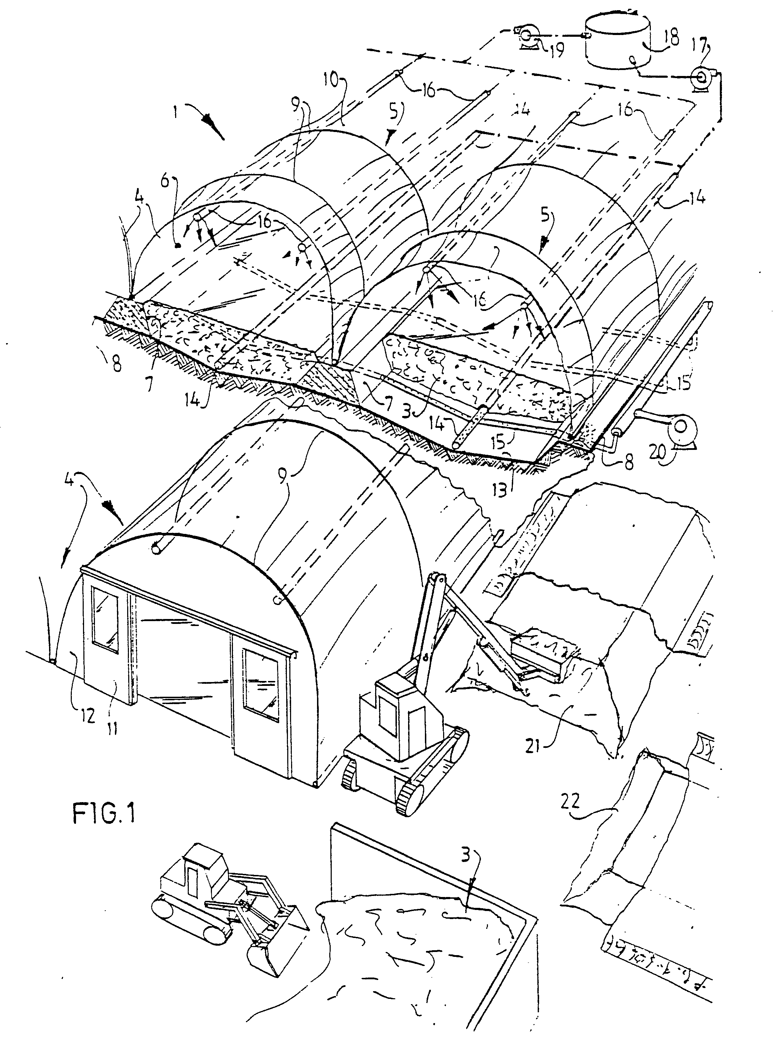

Fig. 1 shows a system 1 for biologically reconditioning contaminated soil 3. System 1 consists of a number of sheds 4 erected adjacently. Using bounding means 5 a space 6 is defined which is substantially impermeable to the contamination present in soil 3. In view of the fact that the contamination can be absorbed in water, bounding means 5 are likewise impermeable to water. Bounding means 5 consist of a foil 8 laid in a dug trench 7 and a foil 10 (IR radiation transmitable) tensioned over frames 9. This foil 10 admits sunlight and makes a closing connection with foil 8 along the lateral sides of shed 4. A building wall 12 provided with sliding doors 11 closes each end wall position of shed 4. In the space 6 is arranged a drainage line 14 along the ground 13 in the longitudinal direction of trench 7. Aerating lines 15 are arranged transversely in trench 7 at some mutual interval. At the top of shed 4 spray lines 16 are arranged at some distance above the contaminated soil 3 accommodated therein. Drainage line 14 connects onto a pump 17, which transports water extracted from soil 3 to a storage tank 18 which at the other side feeds the collected liquid to spray lines 16 via a pump 19. Spray lines 16, space 6 and drainage line 14 thus form a closed cycle, so that liquid extracted from soil 3 possibly containing contamination cannot permeate into the ground 13 and is continually guided through soil 3.

Aerating lines 15 are connected onto an air pump 20 for supplying air to soil 3, for example periodically. Prior to aeration, the liquid present in soil 3 is collected in storage tank 18. Aeration also serves to churn up soil 3. In addition, an aerobic, anaerobic or an anaerobic/anaerobic biological breakdown can be adjusted by feeding in more or less air.

If soil 3 is in itself insufficiently biologically active for the reconditioning, active sludge 21 can be mixed in. In order to adjust an optimal C/(N+P) ratio, manure 22 can be added. An optimal C/(N+P) ratio is 100/(5+1). If the residue of oil tanks must be reconditioned, ordinary soil can be added to this residue which contains for example crystallised paraffins. Shed 4 has for example the following dimensions : 50 m long, 4 m wide and about 3 m high. The height of the bed of contaminated soil is circa 70 cm. These dimensions are such that, usign a suitable agricultural vehicle, the soil can be carried in 6-9 months to a residual concentration of 1 000 mg/kg.

If required soil 3 can be accommodated in sacks (not shown) arranged in space 6, for example hanging on a frame. These sacks have for example a volume of 1 cu. m. Sack side walls are provided with air and/or liquid admitting strips running in vertical direction. (Such sacks are used for example for storing seed potatoes). Using the spray line water can be sprayed in and/or against the sacks. The water that seeps through the soil is drained off via drainage line 14.

After reconditioning of the soil accommodated in the sack is completed, the sack is removed from space 6 and the reconditioned soil can be removed from the sack via an outlet available in the bottom of the sack.

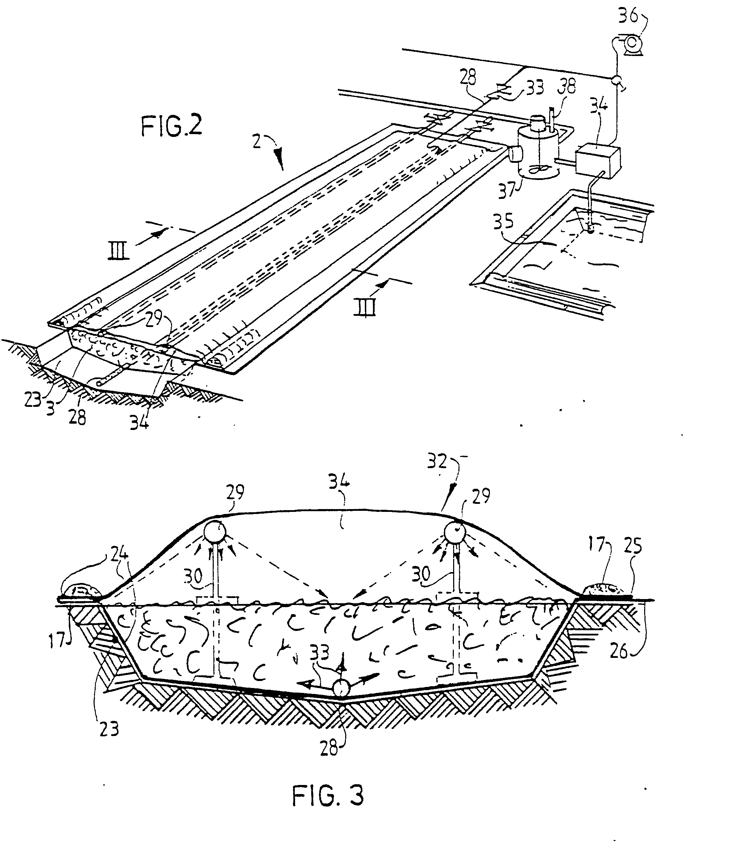

Fig. 2 shows a comparable system 3 for biologically reconditioning contaminated soil 3. In this case foil 24 is arranged in a trench 23, which foil is subsequently folded back over trench 23, whereby the overlapping ends 25 and 26 are covered with a soil wall 17. A combined aeration/drainage line 28 is arranged in axial direction of trench 23. The spray lines 29 support on the ground 31 via supports 30. The part 32 of foil 24 preserves a convex shape as a result of the air 43 fed in periodically via line 28. The space 34 defined by foil 24 is closed off from the environment such that the contamination present in soil 3 cannot penetrate either into the atmosphere or into the ground 31. Drainage line 28 feeds the water extracted from soil 3 via a valve 33 to liquid reservoir 35 by way of a control unit 34. This reservoir consists of a pool arranged in the ground, the bottom and top side of which are once again screened off with foil. After the draining off of substantially all the water into reservoir 35 via drainage line 28, air is fed under the control of control unit 34 through an air pump 36 via line 28 into soil 3 in the enclosed space 44. After the aeration liquid from reservoir 35 is fed via a mixer 37 to spray lines 29. During the extraction of water and the subsequent re-spraying thereof out onto contaminated soil 3, the progress of the reconditioning process can on the one hand be measured in mixer 37 using measuring instruments 38, for example on the basis of the decrease in contaminating substance in the pump circulated liquid. If, on the other hand, the reconditioning displays an abberant tendency, chemicals can be added. With an undesired change in pH, either acids or bases can be added. In order to increase the susceptibility to breakdown of the contamination, detergents can also be fed in. Particular preference is given to those detergents which are themselves biologically difficult to break down. This means that after attaining a sufficient degree of reconditioning soil 3 can be transported away, while the liquid then present in the reservoir is in principle available for re-use.

The system 2 in particular is very suitable for application within agrarian areas. On the one hand this is because its presence control of the system requires little supervision and after completion of the reconditioning process the ground in principle becomes available for re-use, and also because the reconditioned soil and the liquid used in reconditioning can be introduced into the environment without further treatment.

Examples of translucent foils that can be used are Texaleen from Genap in 's-Heerenberg, and EVA-4 from Rolloos in Raamsdonkveer. As a result of the tranclucency of these foils a hot house effect is created whereby the biological reconditioning is accelerated by a factor of three as a result of the rise in temperature.

Finally, it is possible to arrange the soil for reconditioning in the space on a sand bed, so that the drainage and if necessary the aeration can take place more quickly and effectively.

Examples of contaminated soil which can be treated are : contaminated soil resulting from oil drilling, contaminated soil resulting from leakage or breaking of oil pipes, residue that accumulates in oil tanks and soil from former gas works.

## Claims

1. Method for biologically reconditioning of contaminated soil, comprising the steps of :
a) removing the contaminated soil from its surroundings ;
b) placing the removed and contaminated soil in a conditionable space which is formed by bounding means completely enclosing the contaminated soil and being impermeable for water and for the contamination, but at least partially permeable for sunlight ;
c) providing a closed water recycling system comprising
d) recycling of the liquid extracted from the contaminated soil residing in the conditioned space ;
e) moistening the soil with the recycled water ; and
f) optionally aereating periodically the soil residing in the conditioned space.

2. Method as claimed in claim 1, characterized in that. extra water is added to said recycled liquid.

3. Method as claimed in claim 1 or 2, characterized in that chemicals are added to said liquid.

4. Method as claimed in claim 3, characterized in that water soluble chemicals, such as a detergent, for example a biological non-degradable detergent, are added to the contamination.

5. Method as claimed in any of the foregoing claims, characterized in that depending on the contamination, said contaminated soil is mixed with active sludge and/or manure.

6. System for biological reconditioning of contaminated soil, comprising :
1) bounding means at least partially admitting sunlight which form a conditionable space enclosing the contamination for the accommodation therein of said contaminated soil ;
2) drainage means for extracting liquid from said soil ;
3) spray means for spraying said soil, whereby said drainage means and spray means form a closed cycle together with said space ; and
4) if necessary, aerating means for aerating said soil.

7. System as claimed in claim 6, characterized in that a water source is connected onto said cycle.

8. System as claimed in claim 6 or 7, characterized in that a liquid reservoir is incorporated in said cycle.

9. System as claimed in claims 6-8, characterized in that said cycle is provided with a feed for chemicals.

10. System as claimed in any of the foregoing claims, characterized in that said aerating means connect onto a drainage line to be accommodated in the soil.

11. System as claimed in claims 6-9, characterised by separate drainage and aerating lines, preferably laid running in transverse direction relative to one another.

12. System as claimed in claims 6-9, characterised by sacks arranged in said space intended for accommodating said contaminated soil, possibly provided with strips admitting air and/or liquid.

13. System as claimed in claims 6-12, characterized in that said bounding means comprise sunlight admitting foil.

14. System as claimed in any of the foregoing claims, characterized in that said system is at least partially arranged in a trench present in the ground.

**Patentansprüche**

1. Verfahren zum biologischen Wiederaufbereiten von verseuchtem Boden, mit den Schritten :
a) Entfernen des verseuchten Bodens von seiner Umgebung ;
b) Bringen des entfernten und verseuchten Bodens in einen klimatisierbaren Raum, der durch eine den verseuchten Boden vollständig einschließende Begrenzungseinrichtung gebildet wird, die für Wasser und die Verseuchung undurchlässig aber zumindest teilweise durchlässig für Sonnenlicht ist ;
c) Vorsehen eines geschlossenen Wasserkreislaufsystems mit ;
d) Zurückführen der von dem verseuchten, in dem klimatisierten Raum anwesenden Boden entnommenen Flüssigkeit;
e) Befeuchten des Bodens mit der zurückgeführten Flüssigkeit ; und
f) bedarfsweise periodisch Belüften des in dem klimatisierten Raum anwesenden Bodens.

2. Verfahren nach Anspruch 1, dadurch gekennzeichnet, daß zusätzliches Wasser zu der zurückgeführten Flüssigkeit zugesetzt wird.

3. Verfahren nach Anspruch 1 oder 2, dadurch gekennzeichnet, daß Chemikalien zu der Flüssigkeit hinzugesetzt werden.

4. Verfahren nach Anspruch 3, dadurch gekennzeichnet, daß wasserlösliche Chemikalien wie ein Reinigungsmittel bzw. Detergens, z. B. ein biologisch nicht abbaubares Detergens, der Verseuchung hinzugefügt werden.

5. Verfahren nach einem der vorhergehenden Ansprüche, dadurch gekennzeichnet, daß in Abhängigkeit von der Verseuchung der verseuchte Boden mit einem aktiven Schlamm und/oder Dünger gemischt wird.

6. System zum biologischen Wiederaufbereiten von verseuchtem Boden mit :
1) eine Begrenzungseinrichtung, die zumindest teilweise Sonnenlicht zuläßt und einen klimatisierbaren Raum bildet, der die Verseuchung einschließt zum Aufnehmen des verseuchten Bodens darin ;
2) eine Entwässerungseinrichtung zum Entnehmen von Flüssigkeit von dem Boden ;
3) eine Sprüheinrichtung zum Sprühen des Bodens, wodurch die Entwässerungseinrichtung und die Sprüheinrichtung einen geschlossenen Kreislauf zusammen mit dem Raum bilden; und
4) falls nötig, eine Belüftungseinrichtung zum Belüften des Bodens.

7. System nach Anspruch 6, dadurch gekennzeichnet, daß eine Wasserquelle dem Kreislauf aufgeschaltet ist.

8. System nach Anspruch 6 oder 7, dadurch gekennzeichnet, daß ein Flüssigkeitsreservoir in dem Kreislauf eingebaut ist.

9. System nach den Ansprüchen 6 bis 8, dadurch gekennzeichnet, daß der Kreislauf mit einer Zuführung für Chemikalien versehen ist.

10. System nach einem der vorhergehenden Ansprüche, dadurch gekennzeichnet, daß die Belüftungseinrichtung mit einer Entwässerungsleitung verbunden ist, die in dem Boden aufzunehmen ist.

11. System nach den Ansprüchen 6 bis 9, gekennzeichnet durch getrennte Entwässerungs- und Belüftungsleitungen, die bevorzugt in Richtungen quer zueinander angeordnet sind.

12. System nach den Ansprüchen 6 bis 9, gekennzeichnet durch Säcke, die in dem Raum angeordnet sind zum Aufnehmen des verseuchten Bodens und mit Streifen zum Zulassen von Luft und/oder Flüssigkeit versehen sein können.

13. System nach den Ansprüchen 6 bis 12, dadurch gekennzeichnet, daß die Begrenzungseinrichtung eine Sonnenlicht zulassende Folie aufweist.

14. System nach einem der vorhergehenden Ansprüche, dadurch gekennzeichnet, daß das System zumindest teilweise in einem in dem Erdboden vorhandenen Graben angeordnet ist.

**Revendications**

1. Procédé pour le reconditionnement biologique d'un sol contaminé, comprenant les étapes consistant à :
a) séparer le sol contaminé de son environnement ;
b) placer le sol contaminé et séparé dans un espace pouvant être conditionné qui est formé à l'aide de moyens de séparation enfermant complètement le sol contaminé et qui sont imperméables à l'eau et à la contamination, mais qui sont au moins partiellement perméables aux rayons du soleil ;
c) mettre en place un dispositif de recyclage d'eau en circuit fermé comprenant
d) le recyclage du liquide retiré du sol contaminé situé dans l'espace conditionné ;
e) l'humidification du sol avec l'eau recyclée ; et
f) de manière optionnelle, l'aération périodique du sol situé dans l'espace conditionné.

2. Procédé selon la revendication 1, caractérisé en ce que de l'eau supplémentaire est ajoutée au liquide recyclé.

3. Procédé selon la revendication 1 ou 2, caractérisé en ce que des produits chimiques sont ajoutés au liquide.

4. Procédé selon la revendication 3, caractérisé en ce que des produits chimiques solubles dans l'eau, tels qu'un détergent, par exemple un détergent biologique non dégradable, sont ajoutés à la contamination.

5. Procédé selon l'une quelconque des revendications précédentes, caractérisé en ce que, en fonction de la contamination, le sol contaminé est mélangé avec une boue active et/ou de l'engrais.

6. Dispositif pour le reconditionnement biologique d'un sol contaminé comprenant :

1) des moyens de séparation laissant passer au moins partiellement la lumière du soleil, qui forment un espace pouvant être conditionné enfermant la contamination destiné à contenir le sol contaminé ;

2) des moyens de drainage pour extraire le liquide du sol ;

3) des moyens de pulvérisation destinés à réaliser une pulvérisation sur le sol, grâce à quoi les moyens de drainage et les moyens de pulvérisation forment un cycle fermé avec l'espace ; et

4) si nécessaire, des moyens d'aération pour aérer le sol.

7. Dispositif selon la revendication 6, caractérisé en ce qu'une source d'eau est reliée audit cycle.

8. Dispositif selon la revendication 6 ou 7, caractérisé en ce qu'un réservoir de liquide est incorporé dans ledit cycle.

9. Dispositif selon les revendications 6 à 8, caractérisé en ce que le cycle comporte une alimentation en produits chimiques.

10. Dispositif selon l'une quelconque des revendications précédentes, caractérisé en ce que les moyens d'aération sont reliés à une ligne de drainage à disposer dans le sol.

11. Dispositif selon les revendications 6 à 9, caractérisé en ce que des lignes d'aération et de drainage séparées sont disposées de préférence dans des directions transversales l'une par rapport à l'autre.

12. Dispositif selon les revendications 6 à 9, caractérisé en ce que des sacs sont disposés dans l'espace et destinés à recevoir du sol contaminé, pouvant comporter des bandes permettant le passage d'air et/ou de liquide.

13. Dispositif selon les revendications 6 à 12, caractérisé en ce que les moyens de séparation comportent une feuille laissant passer la lumière solaire.

14. Dispositif selon l'une quelconque des revendications précédentes, caractérisé en ce que le dispositif est au moins partiellement disposé dans une tranchée existant dans le terrain.

FIG.1

FIG.2

FIG. 3